(19) **Europäisches Patentamt / European Patent Office / Office européen des brevets**

(11) **EP 3 503 649 B1**

(12) **FASCICULE DE BREVET EUROPEEN**

(45) Date de publication et mention
de la délivrance du brevet:
**09.09.2020 Bulletin 2020/37**

(51) Int Cl.:
**H04W 72/04** *(2009.01)* **H04L 25/02** *(2006.01)*
**H04W 84/18** *(2009.01)*

(21) Numéro de dépôt: **18210768.0**

(22) Date de dépôt: **06.12.2018**

(54) **PROCEDE ET DISPOSITIF POUR CALCULER DES PARAMETRES STATISTIQUES DU CANAL DE PROPAGATION**

VERFAHREN UND GERÄT ZUR BERECHNUNG VON AUSBREITUNGSKANALSTATISTIKEN

METHOD AND DEVICE FOR COMPUTING PROPAGATION CHANNEL STATISTICAL PARAMETERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2017 FR 1701324**

(43) Date de publication de la demande:
**26.06.2019 Bulletin 2019/26**

(73) Titulaire: **Thales**
**92400 Courbevoie (FR)**

(72) Inventeurs:
• **LETURC, Xavier**
**92230 GENNEVILLIERS (FR)**
• **LE MARTRET, Christophe**
**92230 GENNEVILLIERS (FR)**
• **CIBLAT, Philippe**
**75013 PARIS (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A1-01/59963       WO-A1-2006/118892**

• **KAREEM E BADDOUR ET AL: "Improved estimation of the ricean K-factor from I/Q fading channel samples", IEEE TRANSACTIONS ON WIRELESS COMMUNICATIONS, IEEE SERVICE CENTER, PISCATAWAY, NJ, US, vol. 7, no. 12, 1 décembre 2008 (2008-12-01), pages 5051-5057, XP011239964, ISSN: 1536-1276, DOI: 10.1109/T-WC.2008.070972**
• **WANG NI-CHUN ET AL: "Characterizing fading channel under abrupt temporal variations", 2013 IEEE INTERNATIONAL CONFERENCE ON ACOUSTICS, SPEECH AND SIGNAL PROCESSING (ICASSP); VANCOUCER, BC; 26-31 MAY 2013, INSTITUTE OF ELECTRICAL AND ELECTRONICS ENGINEERS, PISCATAWAY, NJ, US, 26 mai 2013 (2013-05-26), pages 5056-5060, XP032508499, ISSN: 1520-6149, DOI: 10.1109/ICASSP.2013.6638624 [extrait le 2013-10-18]**
• **FREDRIK GUSTAFSSON ED - FREDRIK GUSTAFSSON: "Adaptive Filtering and Change Detection", 1 janvier 2000 (2000-01-01), ADAPTIVE FILTERING AND CHANGE DETECTION, JOHN WILEY & SONS, LTD, PAGE(S) 1 - 126, XP002478407, ISBN: 978-0-471-49287-0 * sections II.3.2, II.3.5.5 ***

**Description**

L'invention concerne un procédé et un dispositif permettant de calculer de manière dynamique les paramètres statistiques du canal de propagation dans un système de communication. Elle permet notamment d'allouer de manière dynamique des paramètres de transmission dans des canaux aléatoires pour les réseaux sans fil. Elle peut être utilisée dans le domaine des télécommunications. Elle permet la gestion de l'utilisation des ressources physiques dans les réseaux sans fil de type ad hoc. Elle trouve son application dans des systèmes embarqués.

L'un des problèmes posés est d'allouer de manière optimale des ressources, par exemple, la puissance, le schéma de codage et modulation, aux différents nœuds d'un réseau afin de maximiser les performances de ce réseau ceci, de manière dynamique afin de pouvoir adapter le réseau en permanence aux conditions de propagation qui évoluent suivant la mobilité des nœuds.

Il existe des solutions permettant d'allouer les ressources physiques en contexte mono-utilisateur qui sont basées sur une estimation de la statistique du canal de propagation. Cependant, les solutions existantes considèrent que cette statistique ne varie pas au cours du temps. Or, les terminaux communicants étant mobiles, la statistique est susceptible de varier au cours du temps. Il est donc important d'estimer cette statistique en temps réel afin d'être en mesure d'utiliser les ressources physiques de manière optimale.

L'art antérieur peut être classifié en trois approches : l'estimation de la statistique du canal et de l'allocation de puissance associée [1-2], l'estimation de la statistique du canal [3-4] et l'allocation de puissance basée sur une connaissance statistique du canal [5].

Dans [1], les auteurs proposent une stratégie d'allocation de puissance en considérant le canal de Nakagami-m. Les auteurs proposent également différents estimateurs des paramètres statistiques de ce canal, et évaluent les performances de leur algorithme d'allocation de puissance lorsque la statistique du canal est estimée. Dans [2], un procédé d'allocation de puissance basé sur une estimation de la statistique du canal de Nakagami-m est proposé.

Il existe un grand nombre de références traitant de l'estimation de la statistique du canal de Rice. Dans [3], les auteurs évoquent l'utilisation d'une fenêtre glissante pour traiter le cas d'une statistique pouvant varier dans le temps. Dans [4], les auteurs estiment la statistique du canal de Rice à partir de données réelles, en utilisant une fenêtre glissante comme proposé dans [3]. Aucune de ces références ne traitent le problème d'allocation de ressources.

Dans [5], une allocation de puissance ayant pour but de minimiser la puissance d'émission en contexte multi-utilisateur est effectuée, lorsque la statistique du canal est considérée comme parfaitement connue.

Dans les procédés connus de l'art antérieur, la statistique du canal est considérée comme constante, sauf dans [4] où une fenêtre glissante de taille constante est utilisée. Or, dans des systèmes réels de communications, cette statistique est susceptible de varier de façon plus ou moins rapide au cours du temps du fait de la mobilité des terminaux. En outre, l'allocation de ressources réalisée dans ces travaux se focalise sur des contextes mono-utilisateur, avec pour objectif de maximiser ou minimiser une unique fonction de coût.

L'enseignement technique du document WO 01/59963 concerne un procédé et un système pour calculer en temps réel ou quasi-temps réel le facteur de Rice. Ce document utilise une fenêtre temporelle périodique et non-glissante pour estimer la statistique du canal, estimant que l'utilisation d'une fenêtre glissante est trop onéreuse. De plus, il ne mentionne ni ne suggère la détection d'une rupture éventuelle.

L'idée de la présente invention consiste notamment à estimer la statistique du canal en temps réel. Cette estimation est réalisée via l'utilisation d'une fenêtre glissante (pouvant être de taille variable), combinée à l'utilisation d'outils issus de la détection de rupture. La fenêtre glissante permet de suivre les variations de la statistique du canal lorsque cette dernière évolue de façon continue dans le temps. La taille de la fenêtre est adaptée à la vitesse de variation de la statistique : plus la statistique varie rapidement, plus la fenêtre sera petite afin de suivre au mieux l'évolution de la statistique. Les outils de détection de rupture permettent de suivre les évolutions discontinues de la statistique, par exemple, lors du passage d'une configuration sans ligne de vue entre l'émetteur et le récepteur à une configuration avec une forte ligne de vue émetteur/récepteur. Ces outils permettent de détecter ce type de discontinuité afin de suivre au mieux l'évolution de la statistique.

L'invention concerne un procédé pour calculer en temps réel ou quasi-réel, les valeurs des statistiques d'un canal de propagation afin d'allouer des ressources à un ou plusieurs liens de communication entre deux nœuds dans un réseau de communication comprenant au moins les étapes suivantes :

Estimer en temps réel ou quasi-réel les paramètres statistiques $K_l$ qui correspond au rapport entre la puissance du signal reçu en ligne de vue directe et la puissance des trajets diffus et $G_l$ qui correspond au rapport gain-à-bruit moyen d'un modèle de canal de Rice modélisé pour chaque lien $l$ du réseau en utilisant les informations provenant de séquences d'apprentissage contenues dans le signal reçu qui permettent d'estimer le canal de propagation,
A partir des estimations du canal de propagation mémorisées, au niveau d'un récepteur, exécuter en parallèle les étapes suivantes:

EP 3 503 649 B1

- détecter s'il y a un changement dans la distribution statistique des estimations du canal traduisant une rupture,

  Si une rupture est détectée, conserver une partie des estimations du canal, et estimer la statistique $K_l$, en utilisant une partie $T_W/2$ des estimations du canal de propagation avec $T_W$ le nombre d'estimations du canal utilisé pour effectuer la détection de rupture,
  Sinon, lorsqu'aucune rupture n'est détectée, estimer la statistique $K_l$, du canal effectuée sur les $T_W$ dernières estimations du canal,

- estimer la statistique $G_l$ du canal en utilisant une fenêtre temporelle glissante,

Transmettre les valeurs de statistiques de canal calculées à une étape d'allocation des ressources qui prend en compte les contraintes de service et définit l'allocation des ressources en fonction des estimations des statistiques du canal.

Pour détecter une rupture on calcule, par exemple, la phase pour chaque échantillon estimé du canal, on sépare en deux sous-ensembles l'ensemble des phases calculées et on compare entre elles les deux distributions statistiques ainsi obtenues, si un changement dans les distributions statistiques est détecté, on conserve uniquement un des deux sous-ensembles, sinon on conserve toutes les estimations du canal.

La comparaison du contenu des deux distributions statistiques peut être effectuée en utilisant un test basé sur la vraisemblance statistique des estimations du canal, à l'aide de tests statistiques d'adéquation à deux échantillons.

Le paramètre $K_l$ traduisant une relation entre la puissance du trajet en ligne de vue et la puissance de trajets diffus est estimé, par exemple, en maximisant la log-vraisemblance statistique de la phase des estimations du canal.

Le procédé peut comporter une étape de calcul des statistiques du canal et une étape de transmission des statistiques du canal calculées vers un gestionnaire de ressources, ledit gestionnaire de ressources allouant les ressources aux liens de communication du réseau ad-hoc.

Le procédé peut aussi comporter une étape de calcul des statistiques du canal selon les étapes indiquées ci-dessus et une étape de transmission des statistiques du canal calculées au sein d'un lien de communication entre un émetteur et un récepteur, et chaque lien de communication décide de l'allocation des ressources en fonction des contraintes.

On attribue, par exemple, à chaque lien de communication une puissance d'émission, une proportion de la bande de fréquence utilisée au sein du réseau ad-hoc ainsi qu'un schéma de modulation et de codage, lesdits paramètres étant attribués afin de maximiser ou de minimiser une ou plusieurs desdites grandeurs : la puissance énergétique totale ou la somme des débits des liens de communications.

Le modèle utilisé pour la modélisation du canal est un modèle de Rice.

L'invention concerne aussi un système pour calculer les statistiques d'un canal de propagation afin d'allouer des ressources dans un réseau de communication comportant plusieurs liens de communication caractérisé en ce qu'il comporte un allocateur de ressources et un processeur configuré pour exécuter les étapes du procédé selon l'invention.

L'allocateur de ressources peut être inclus dans un terminal distinct des émetteurs/récepteurs des liens de communication auxquels on alloue des ressources.

L'invention vise aussi un système d'allocation de ressources dans un réseau de communication ad-hoc caractérisé en ce que chaque émetteur/récepteur d'un lien de communication demandant une allocation de ressources est configuré pour exécuter les étapes du procédé selon l'invention.

D'autres caractéristiques et avantages apparaîtront mieux à la lecture de la description qui suit annexée des figures qui représentent :

- Figure 1, un exemple de réseau ad hoc avec allocateur de ressources, et la figure 2, la remontée des statistiques,
- Figure 3, un exemple de réseau ad hoc sans allocateur de ressources, et la figure 4, la remontée des statistiques,
- Figure 5, un exemple des étapes pour la procédure d'estimation et d'allocation des ressources,
- Figure 6, un exemple détaillé de la procédure d'estimation des statistiques,
- Figure 7, un exemple détaillé de la procédure de détection de rupture.
- Figure 8, un exemple détaillé de la procédure d'estimation basée sur une fenêtre glissante.

La description qui suit est donnée à titre illustratif et nullement limitatif en considérant un réseau composé de liens de communication entre deux nœuds mobiles communiquant entre eux. L'un des objectifs de la présente invention est d'assigner aux liens de communication des ressources physiques en termes de puissance d'émission, de bande de fréquence et de schéma de modulation et de codage en se basant uniquement, en fonctionnement normal du réseau, sur une connaissance statistique du canal de propagation. Ceci permet notamment d'éviter un échange excessif d'informations dans le réseau afin de réduire la signalisation nécessaire.

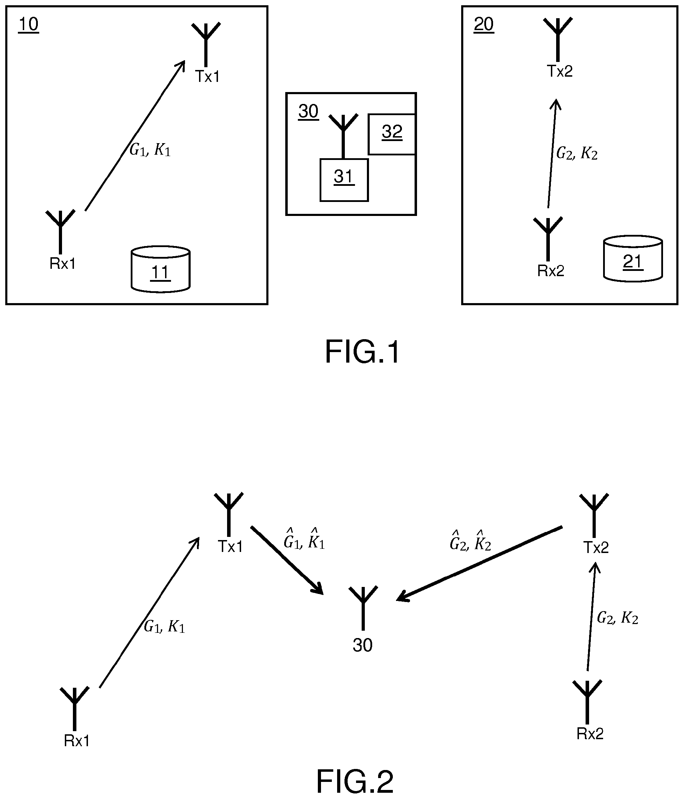

Différentes configurations peuvent être envisagées. Comme il est illustré à la figure 1, le système peut comporter un premier lien de communication 10 avec un émetteur Tx1 et un récepteur Rx1, un deuxième lien de communication 20 ayant un émetteur Tx2 et un récepteur Rx2, et un terminal 30 élu pour être gestionnaire des ressources. Le lien de communication est défini entre deux nœuds du réseau de communication non représentés. De façon régulière, les émetteurs transmettent des séquences d'apprentissages afin d'estimer le canal de propagation. Ces estimations du canal sont stockées dans une mémoire 11, 21 à côté du récepteur Rx1, Rx2. Dans ce cas chaque récepteur regroupe les informations statistiques des liens vers le gestionnaire des ressources, comme il est illustré à la figure 2. Le terminal 30 en plus des moyens de communication connus de l'art antérieur comprend un processeur 31 configuré pour exécuter les étapes du procédé selon l'invention et un allocateur de ressources 32 ou gestionnaire de ressources. A partir des valeurs statistiques estimées, le terminal 30 va pouvoir réaliser l'allocation de ressources, en utilisant une méthode connue de l'homme du métier. Le gestionnaire de ressources 32 attribue à chaque lien de communication 10, 20, une puissance d'émission, une proportion de la bande de fréquence B, ainsi qu'un schéma de modulation et de codage MC. Ces paramètres sont attribués afin de maximiser ou minimiser une ou plusieurs grandeurs. Par exemple, il est possible de déterminer les paramètres précités afin de minimiser la consommation énergétique totale sous les contraintes de débit pour certains utilisateurs, tandis que pour d'autres liens de communication, l'objectif peut être de maximiser leur débit sous des contraintes de puissances d'émissions maximales.

L'allocation peut être réalisée soit par une des parties prenante de la communication (émetteur ou récepteur), ou bien par un dispositif différent des émetteurs/récepteurs, externe au lien communication.

En résumé, le procédé dans cette variante de réalisation, estime la statistique du canal comme il va être détaillé ci-après. Si la statistique du canal a varié, l'information est remontée d'un lien de communication 10, 20, vers le terminal 30 dont le calculateur 31 ou processeur calcule alors l'allocation optimale des ressources et le gestionnaire des ressources 32 indique en retour aux liens de communication les ressources dont ils disposent.

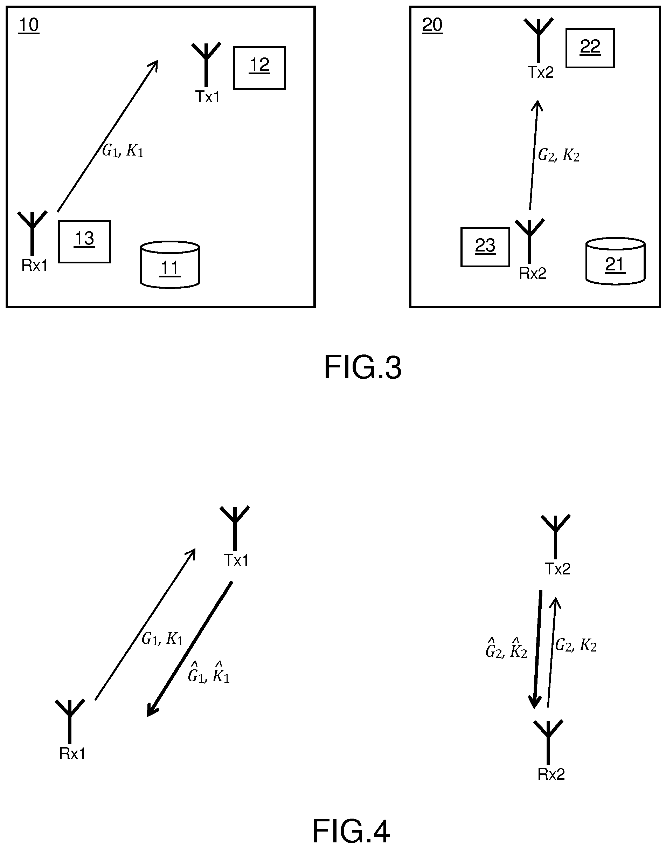

Dans un autre exemple illustré à la figure 3, chaque lien de communication 10, 20, calcule des valeurs de statistiques et les récepteurs de chaque lien de communication communiquent la statistique du canal à l'émetteur associé. Un lien de communication, comporte un allocateur de ressources 12, 22 qui va réaliser l'allocation de ressource de manière décentralisée, selon la figure 4. Dans cette configuration « décentralisée », chaque lien de communication du réseau de communication comprend des moyens de communication connus de l'art antérieur, un allocateur de ressources 12, 22 et un processeur 13, 23, configuré pour exécuter les étapes du procédé selon l'invention. Le processeur peut être positionné au niveau de l'émetteur d'un lien ou au niveau d'un récepteur. Chaque lien de communication pourra dans ce cas allouer les ressources de communication, à partir des valeurs statistiques estimées.

L'exemple détaillé ci-après, donné à titre illustratif et nullement limitatif, est basé sur une technique de modulation orthogonale d'accès multiple au canal. Par exemple, il est possible d'utiliser une modulation à accès multiple par division de fréquence orthogonale ou OFDMA (Orthogonal Frequency Division Multiple Access) ou une modulation à accès simple porteur SC-FDMA (Single Carrier Frequency Division Multiple Access).

Soit $L$ le nombre de liens dans le réseau. Ces $L$ liens partagent une bande de fréquence $B$, qui est divisée en $N_c$ sous porteuses. Le signal reçu par un récepteur à l'instant $i$ pour le lien $l$ sur la sous porteuse $n$ s'écrit :

$$y_l[n,i] \coloneqq \Lambda_l[i] h_l[n,i] x_l[n,i] + b_l[n,i], \quad (1)$$

où $x_l[n,i]$ est le signal émis sur la sous porteuse $n$ à l'instant $i$, $\Lambda_l[i]$ est un coefficient d'atténuation réel qui correspond aux évanouissements à grande échelle (« large scale fading ») à l'instant $i$, $h_l[n, i]$ est un coefficient d'atténuation complexe qui correspond aux évanouissements à petite échelle (« small scale fading ») et $b_l[n, i]$ est un bruit blanc complexe, considéré comme gaussien, centré et de variance $2\sigma_b^2$ Dans le cadre de cette invention, la variance $2\sigma_b^2$ est considérée comme connue du récepteur et suffisamment faible, comme il sera détaillé par la suite. Cette valeur peut être obtenue par exemple via un processus de calibration connu de l'homme du métier.

Sur le lien $l$, un émetteur transmet son signal avec une puissance d'émission $P_l$, avec

$$\mathbb{E}[|x_l[n,i]|^2] = P_l,$$

où

$$\mathbb{E}[.]$$

est l'opérateur espérance mathématique. $\gamma_l$ est définie comme étant la proportion de bande de fréquence allouée au lien *l* pour communiquer, et $MCS_l$ le schéma de modulation et de codage du lien *l*. En outre, on définit l'ensemble des puissances pour les L liens, l=1..L, **P** := $[P_1,..., P_L]$, l'ensemble des $\gamma$ := $[\gamma_1,...,\gamma_L]$ et l'ensemble des schémas de modulation et codage **MCS** : = $[MCS_1,...,MCS_L]$.

Pour des raisons de simplification d'écriture, dans l'équation (1) ainsi que dans toute la suite de la description, les indices temporels sont discrétisés, ce qui signifie que l'instant *i* correspond en fait à l'instant $iT_s$ avec $T_s$ la période d'échantillonage.

Dans l'équation (1), les évanouissements à long terme $\Lambda_l[i]$ sont composés de la perte de puissance du signal émis par rapport au signal reçu due à la distance entre l'émetteur $R_{xi}$ et le récepteur $T_{xi}$, connue sous le nom de pathloss en anglais et de la perte de puissance due à la présence de grand obstacle entre l'émetteur $R_{xi}$ et le récepteur $T_{xi}$, connue sous le nom de phénomène de masquage ou shadowing en anglais. Le pathloss est déterministe tandis que le shadowing est aléatoire. Ces deux phénomènes sont regroupés sous la dénomination d'évanouissement à grande échelle. De plus, $\Lambda_l[i]$ varie lentement dans le temps beaucoup plus lentement que $h_l[n, i]$.

Les évanouissements à petite échelle $h_l[n, i]$ sont également des atténuations de la puissance émise par rapport au signal reçu, qui sont dues à des phénomènes physiques tels que la réflexion ou la diffraction du signal transmis. $h_l[n, i]$ varie dans le temps beaucoup plus rapidement que $\Lambda_l[i]$.

Dans le cadre de cette invention, on considère un modèle statistique bien connu de canal de propagation : le canal de Rice. Ainsi, on considère que $h_l[n, i]$ suit une loi normale complexe de moyenne $\mu_l[i]$ et de variance $2\sigma_l^2[i]$. En outre, sans perte de généralité, on considère $h_l[n, i]$ comme étant de puissance normalisée, ce qui signifie

$$\mathbb{E}[|h_l[n,i]|^2] := \Omega_l = 1.$$

Il est ainsi possible de montrer que $|h_l[n, i]|$ suit une loi de Rice de paramètres statistiques $K_l[i] := \frac{|\mu_l[i]|^2}{2\sigma_l^2[i]}$ et $\Omega l$ . Physiquement, $K_l[i]$ représente le rapport entre la puissance du signal reçu en ligne de vue directe et la puissance des trajets diffus. Le procédé peut aussi s'appliquer à tous types de modèles de canaux, en adaptant les estimateurs des statistiques du canal.

A l'aide des notations définies précédemment, il est possible de définir $\check{h}_l[n, i]$ := $\Lambda_l[i]h_l[n, i]$ comme un coefficient de canal regroupant à la fois les évanouissements à petite échelle et à grande échelle. Pour $\Lambda_l[i]$ constant, $\check{h}_l[n, i]$ suit une loi complexe gaussienne de moyenne $\Lambda_l[i]\mu_l[i]$ et de puissance

$$\mathbb{E}\left[|\check{h}[n,i]|^2\right] = \Lambda_l[i]^2. \ \Lambda_l[i]$$

varie lentement et peut donc être considéré comme constant sur une certaine durée temporelle qui dépend de la vitesse de l'émetteur et du récepteur. Ainsi, sur cette durée temporelle, le canal se comporte comme un canal de Rice de paramètres statistiques $K_l[i]$ et $\Lambda_l[i]^2$. Le rapport gain-à-bruit moyen est défini par :

$$G_l[i] := \frac{\Lambda_l[i]^2}{2\sigma_b^2}. \ (2)$$

Pour bien comprendre l'invention, l'exemple détaillé qui suit est donné dans le cas d'un système centralisé tel qu'illustré à la figure 1. Afin d'estimer la statistique du canal, la première opération à réaliser par le processeur d'un lien de communication est d'estimer le canal de propagation $\check{h}[n, i]$. Pour ce faire, on considère l'utilisation de symboles pilotes (contenus dans un signal reçu au niveau du récepteur d'un lien de communication), c'est-à-dire des symboles connus du récepteur. Ainsi, étant donné (1), lorsque $x_n[n, i]$ est connu, le canal peut être estimé de la façon suivante :

$$\hat{h}_l[n,i] = \frac{y_l[n,i]}{x_l[n,i]}$$

Dans le cadre d'une communication multiporteuses, les $h_l[n, i]$ (et donc les $\hat{h}_l[n, i]$) sont corrélés fréquentiellement, c'est-à-dire que $\hat{h}_l[n_1, i]$ est corrélé avec $\hat{h}_l[n_2, i]$. Cependant, par simplicité d'écriture, cette corrélation est supposée négligeable, ce qui est réaliste lorsque l'écart entre les sous-porteuses attribuées au lien *l* est supérieur à la bande de cohérence du canal. Ainsi, pour la suite de la description, la dépendance en *n* sera omise lorsque l'on fera référence aux estimations du canal.

En utilisant l'équation (2), il est possible de montrer que, pour $\Lambda_l[i]$ constant, $\hat{h}_l[i]$ suit une loi normale complexe de moyenne $\mu_l[i]$ et de puissance $\Lambda_l[i]^2 + 2\sigma_b^2/P_l$.

Dans les exemples qui suivent, $\hat{h}_l[i]$ s'écrit sous la forme suivante :

$$\hat{h}_l[i] = \Lambda_l[i]\left(|\mu_l[i]|e^{j(\theta_l^0 + w_0^l i)} + g_l[i]\right) + \hat{b}_l[i]$$

où $\theta_l^0$ est la phase initiale de la composante principale du signal reçu, $g_l[i]$ est une variable aléatoire complexe gaussienne de moyenne nulle et de variance $2\sigma_l^2[i]$, $\hat{b}_l[i]$ est une variable aléatoire complexe gaussienne de moyenne nulle et de variance $2\sigma_b^2/P_l$ et $w_0^l := 2\pi f_l^d \cos(\beta_l^0)$ avec $f_l^d$ la fréquence Doppler du lien *l* et $\beta_l^0$ l'angle d'arrivée de la composante spéculaire du lien *l*. Dans le cadre de l'invention, $w_0^l$ est considérée comme connue. Cette grandeur peut être estimée à l'aide des estimateurs proposés dans la référence [6] de l'art antérieur, qui ne sont donc pas discutés dans la description.

La densité de probabilité de la phase des $\hat{h}_l[i]$, notée $\varphi_l[i]$, peut s'écrire comme suit, lorsque $2\sigma_b^2 = 0$ :

$$p_l(\varphi, \Phi, i) = \frac{1}{2\pi}e^{-K_l}\left(1 + q(i)\sqrt{\pi}e^{q(i)^2}(1 + \mathrm{erf}(q(i)))\right) \quad (3)$$

avec $q(i) = \sqrt{K_l}\cos(\theta - \theta_l^0 - w_l^0 i)$ et $\Phi_l := [K_l, \theta_l^0]$.

L'équation (3) montre que la distribution statistique de la phase des $\hat{h}_l[i]$ est non stationnaire puisqu'elle dépend de *i*.

Lors d'une première étape, la phase des $\hat{h}_l[i]$ va être rendue stationnaire via l'opération suivante :

$$\tilde{h}_l[i] := e^{-jw_l^0 i}\hat{h}_l[i]$$

La densité de probabilité de la phase des $\tilde{h}_l[i]$ s'écrit comme suit lorsque $2\sigma_b^2 = 0$

$$p_l(\varphi, \Phi) = \frac{1}{2\pi}e^{-K}\left(1 + q\sqrt{\pi}e^{q^2}(1 + \mathrm{erf}(q))\right) \quad (4)$$

avec $q = \sqrt{K}\cos(\theta - \theta_l^0)$.

Dans la suite de la description, on considère $2\sigma_b^2$ suffisamment faible pour que l'équation (4) représente bien la densité de probabilité de la phase des échantillons de canal estimés.

Comme il a été dit précédemment, l'un des objectifs de la présente invention est de calculer les paramètres statistiques d'un canal de propagation en temps réel afin, par exemple, de réaliser une allocation de ressources basée uniquement sur une connaissance statistique du canal de propagation. Ainsi, le procédé comporte au moins les deux opérations suivantes :

   1- Estimer les paramètres statistiques $K_l$ et $G_l$ du canal de propagation pour chaque lien, l=1 ...L, ceci est réalisé au niveau de chaque lien de communication,
   2- Réaliser une allocation de ressources basée sur ces estimations des statistiques du canal, le gestionnaire regroupe l'ensemble des informations statistiques relatives à tous les liens entre les liens de communication.

Dans le cas de la deuxième variante de réalisation, cas décentralisé, chaque lien de communication va exécuter ces opérations afin d'allouer des ressources à partir des paramètres statistiques estimés du canal de propagation.

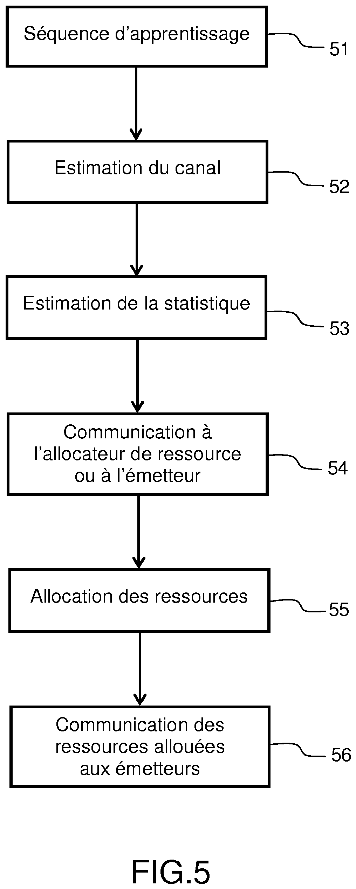

La figure 5 illustre les étapes exécutées par le processeur de chaque lien de communication.

A partir de la séquence d'apprentissage 51 contenue dans le signal reçu au niveau d'un récepteur, le processeur d'un lien de communication estime le canal 52, puis la statistique du canal 53. Ces informations sont transmises à l'allocateur de ressources (ou à l'émetteur du lien de communication 54) afin de réaliser l'allocation des ressources 55. Lors de la dernière étape 56, le gestionnaire des ressources ou chaque récepteur d'un lien de communication va procéder à l'allocation des ressources pour une prochaine émission.

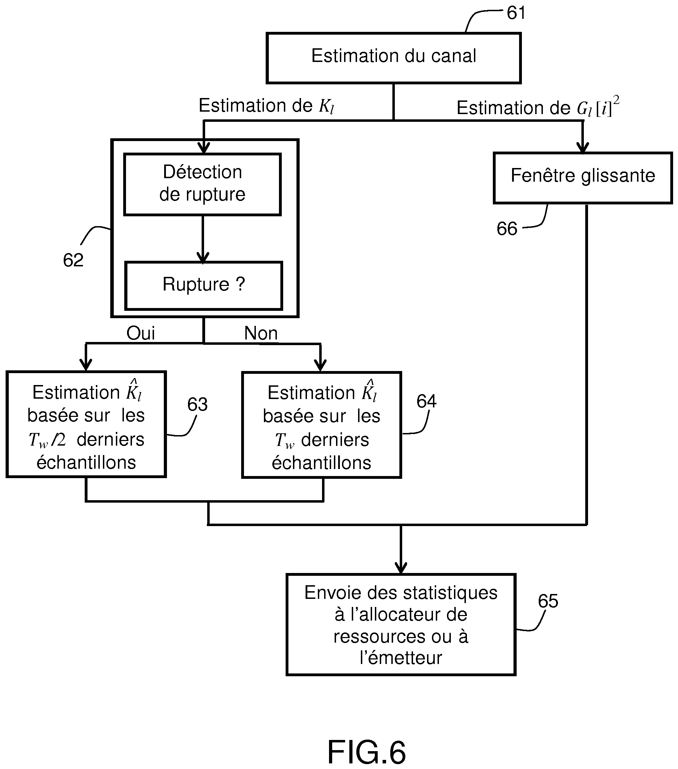

Le procédé selon l'invention prend en compte la variabilité temporelle de la statistique du canal. Pour ce faire, deux types de variations sont considérés à titre d'exemple illustratif à la figure 6: 1) des variations disruptives et 2) des variations continues dans le temps.

La partie gauche de la figure 6 illustre le cas des variations disruptives des statistiques du canal qui sont susceptibles d'arriver notamment concernant la valeur de $K_l$ puisque ce paramètre traduit une relation entre la puissance du trajet en ligne de vue directe et la puissance des trajets diffus. Cette valeur peut varier, par exemple, lors du passage d'une configuration de communication où il existe une ligne de vue directe entre l'émetteur et le récepteur, à une configuration sans ligne de vue directe.

Après estimation du canal 61, le processeur d'un lien de communication regarde s'il y a une détection de rupture 62. Dans le cas où il détecte une rupture (i.e., rupture dans une communication), le processeur estime $\hat{K}_l$ sur la base des $T_W/2$ dernières estimations du canal, 63. Lorsque le processeur ne détecte pas de rupture alors le processeur va estimer 64 le paramètre $K_l$ sur la base des $T_W$ dernières estimations du canal issus de l'étape d'estimation du canal. Puis le processeur va transmettre les statistiques calculées à l'allocateur de ressources (gestionnaire du réseau) ou à l'émetteur du lien de communication qui a réalisé ces calculs, 65.

Une variation disruptive du paramètre $K_l$ se traduit de la façon suivante :

$$K_l = \begin{cases} K_l^1 & \text{pour } i = 1, \dots, T_D \\ K_l^2 & \text{pour } i = T_D + 1, \dots, T_W \end{cases}$$

où $T_D$ représente l'instant où le changement de valeur de la statistique est survenu, et $T_W$ représente le nombre d'estimations du canal utilisé pour effectuer la détection de rupture. Le problème de la détection de rupture est exprimé sous la forme d'un problème de tests d'hypothèses qui s'écrit comme suit :

$H_0$ : le paramètre $K_l$ est constant $\forall i \in [1, \dots, T_W]$

$H_1$ : $K_l[i] = K_l^1 \ \forall i \in [1, \dots, T_D], K_l[i] = K_l^2 \ \forall i \in [T_{D+1}, \dots, T_W]$, le paramètre varie à l'échantillon $T_D$.

L'hypothèse $H_0$ correspond au cas où $K_l$ n'a pas varié, tandis que $H_1$ correspond au cas d'une variation de $K_l$.

En ce qui concerne les variations continues dans le temps des statistiques du canal, ces dernières surviennent également de par la mobilité des liens de communication, la partie droite de la figure 6 illustre l'utilisation d'une fenêtre glissante 66 avant transmission des statistiques calculées, 65. En effet, $\Lambda_l[i]$ tient compte de la perte de puissance due à la distance entre l'émetteur et le récepteur. Typiquement, il est commun d'utiliser la relation $\Lambda_l[i] \propto d_l[i]^{-\alpha}$, où $\propto$ signifie une relation de proportionnalité, et $d_l$ est la distance entre l'émetteur et le récepteur du lien $l$ à l'instant $i$ et $\alpha$ est un coefficient d'atténuation compris entre 2 et 4. La distance $d_l[i]$ évolue dans le temps du fait de la mobilité des liens de communication, et par conséquent la puissance du signal reçu va varier dans le temps. En outre, $\Lambda_l[i]$ est également sujet à des fluctuations aléatoires, introduisant ainsi également une variation de la puissance reçue.

Ainsi, il est clair que lorsque les statistiques du canal varient dans le temps, il est contre-productif d'utiliser les estimations de canal les plus anciennes puisque la distribution statistique de ces estimations de canal est différente de la distribution statistique à l'instant présent.

Afin d'être en mesure de tenir compte de ces deux types de variations possibles des statistiques, le procédé selon l'invention utilise une approche combinant l'utilisation de fenêtres glissantes et d'outils issus de la détection de rupture afin d'estimer au mieux la statistique du canal pour réaliser l'allocation de ressource optimale associée.

Dans la suite, l'approche basée sur la détection de rupture est détaillée. La détection de rupture vise à détecter si $K_l$ (paramètre du canal de Rice) a varié de manière disruptive dans le temps.

A titre d'exemple, la suite de la description base la détection de rupture du paramètre $K_l$ sur la phase des estimations de canal afin de s'affranchir des non stationnarités introduites par les effets de masquage. Dans cette optique, le procédé utilise, par exemple, des procédures de détection de rupture non paramétriques, à l'instar de [7].

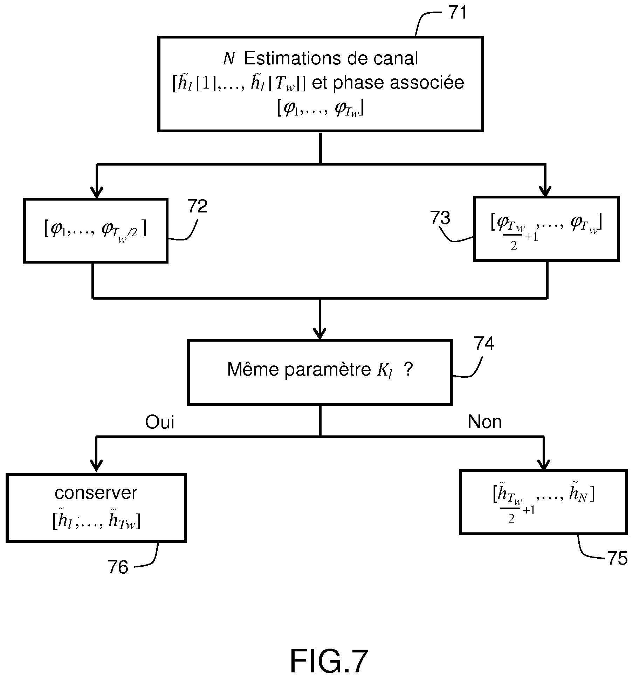

L'idée de la présente invention est aussi d'offrir un système peu complexe. Pour cela, la figure 7 illustre un exemple pour exécuter la procédure de détection de rupture. Un nombre $T_W$ d'estimations de canal $[\tilde{h}_l[1], \dots, \tilde{h}_l[T_W]]$ est

à disposition 71. La phase de chacunes de ces estimations de canal est calculée. Cet ensemble de phases $\varphi = [\varphi_1,...,\varphi_{T_W}]$ est divisé en deux sous-ensembles de taille $T_{W/2}$ : $\varphi_1 := [\varphi_1, ..., \varphi_{T_W/2}]$ 72 et $\boldsymbol{\varphi}_2 := [\varphi_{\frac{T_W}{2}+1}, ..., \varphi_{T_W}]$ 73. Les distributions statistiques de $\varphi_1$ et $\varphi_2$ sont alors comparées, 74, test sur $K_l$. Si aucun changement dans les distributions statistiques n'est détecté, alors la procédure de détection de rupture prend fin jusqu'à l'arrivée de l'échantillon estimés de canal suivant, $[\hat{h}_1,...,\hat{h}_{T_W}]$, 75. Si une rupture est détectée, les échantillons de $\varphi_1$ sont supprimés de la mémoire afin de ne garder que ceux de $\varphi_2$, $\left[\hat{h}_{\frac{T_W}{2}+1}, ..., \hat{h}_{T_W}\right]$, 76.

Tout test statistique d'adéquation aux données peut être choisi pour comparer les distributions de $\varphi_1$ et $\varphi_2$. Par exemple, il est possible d'utiliser la statistique $Z_C$ issue de [8] qui s'écrit comme suit :

$$Z_C = \frac{1}{T_W} \sum_{k=1}^{2} \sum_{m=1}^{T_W/2} \log\left(\frac{T_W}{2m-1} - 1\right) \log\left(\frac{T_W}{R_{km} - 0.5} - 1\right)$$

où $R_{km}$ est le rang de $\varphi_{k(m)}$ dans $\varphi$, avec $\varphi_{k(m)}$ le $m^{ème}$ plus grand élément de $\varphi_k$ dans $\varphi$. La statistique $Z_C$ est ensuite comparée à un seuil, obtenu par simulation de Monte Carlo, par exemple. Si la statistique est inférieure au seuil, alors une rupture est détectée. Dans le cas contraire, on ne détecte pas de rupture.

Selon une autre variante de réalisation, le procédé utilise une estimation par fenêtre glissante ayant notamment pour but d'estimer à la fois $K_l$ et $G_l$.

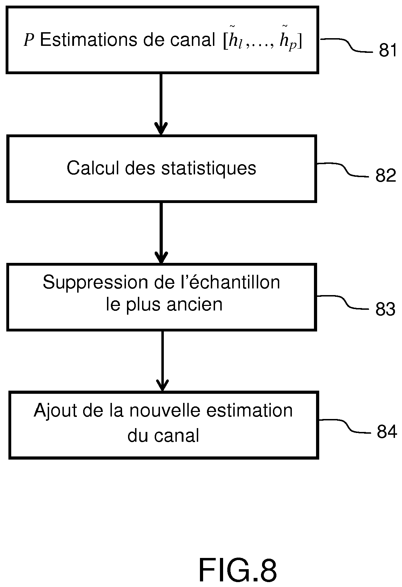

L'estimation basée sur une fenêtre glissante illustrée à la figure 8 consiste simplement à utiliser uniquement les dernières estimations de canal estimés pour réaliser l'estimation de $K_l$ et $G_l$.

Pour cela, le procédé va adapter la taille de la fenêtre glissante à la variabilité des statistiques du canal, la variabilité de la puissance du signal reçue étant liée à la vitesse relative du récepteur par rapport à l'émetteur. Ainsi, une taille de fenêtre proportionnelle évoluant de façon proportionnelle à l'inverse de la vitesse relative pourrait être retenue, ce qui se traduit de la façon suivante :

$$T_{F,G_l} \propto \frac{1}{v_{R,l}}, \quad (5)$$

où $v_{R,l}$ est la vitesse relative de l'émetteur par rapport au récepteur sur le lien $l$.

On dispose de P estimations de canal $[\tilde{h}_1,...,\tilde{h}_P]$, 81, on calcule des statistiques du canal 82, puis on supprime l'échantillon le plus ancien 83, avant d'ajouter la nouvelle estimation de canal 84. Par exemple, pour l'estimation de $G_l$ $P = T_{F,G_l}$.

Les estimateurs de la statistique du canal de propagation vont être explicités.

Comme $2\sigma_b^2$ est connu, estimer $G_l$ revient à estimer $\Lambda_l[i]^2$. Lorsque $\Lambda_l[i]^2$ est constant sur une certaine durée temporelle, ce paramètre correspond au moment d'ordre deux du canal et peut être estimé via l'équation suivante :

$$\widehat{\Lambda}_l[i]^2 = \sum_{k=1}^{T_{F,G_l}} \left|\hat{h}_l[k]\right|^2 - \frac{2\sigma_b^2}{P_l}. \quad (6)$$

Une estimation de $G_l$ est alors obtenue par la fomule

$$\hat{G}_l = \frac{\widehat{\Lambda}_l[i]^2}{2\sigma_b^2}$$

L'estimation de $K_l$ peut être effectuée en utilisant 1) les modules des estimations de canal, 2) la phase des estimations du canal ou 3) les échantillons complexes des estimations de canal.

Afin de nous affranchir des effets de masquages dans l'estimation du paramètre $K_l$, cette estimation se fera en utilisant la phase des estimations de canal. Pour ce faire, l'approche décrite ci-après utilise la maximisation de la log-vraisemblance de la phase des estimations de canal. En pratique, les estimations de canal sont corrélés en fréquence, mais également en temps. Cependant, afin de permettre des développements analytiques et de ne pas dépendre d'un modèle de corrélation spécifique, nous ferons l'hypothèse que les estimations de canal peuvent être considérés comme décorrélés temporellement. Cette hypothèse est réaliste si les estimations sont réalisées à des instants séparés par une période de temps suffisamment longue. Les estimations de canal étant considérés comme indépendants, il est ainsi possible d'écrire la vraisemblance de la phase des estimations de canal par la formule suivante :

$$L(\boldsymbol{\varphi}, \boldsymbol{\Phi}) = \prod_{i=1}^{T_K} p_l(\varphi_i, \boldsymbol{\Phi}) \qquad (7)$$

où $T_K$ est le nombre d'estimations de canal à disposition pour réaliser l'estimation. En particulier, $T_K = T_W/2$ lorsqu'une rupture a été détectée, et en l'absence de détection de rupture, $T_K = T_W$ est la taille de la fenêtre d'estimation. Par exemple, on peut choisir $T_K = T_{F,G}$. D'après l'équation (7), la log-vraisemblance s'écrit comme suit

$$\log\big(L(\boldsymbol{\varphi}, \boldsymbol{\Phi})\big) = \sum_{i=1}^{T_K} \log\big(p_l(\varphi_i, \boldsymbol{\Phi})\big)$$

L'estimation du paramètre $K_l$ est basée sur la maximisation de la log-vraisemblance des données. Nous proposons ainsi l'estimateur suivant :

$$\widehat{\boldsymbol{\Phi}} = \underset{\boldsymbol{\Phi}}{\operatorname{argmax}} \log(L(\boldsymbol{\varphi}, \boldsymbol{\Phi}))$$

L'estimateur proposé correspond au maximum de vraisemblance appliqué à la phase des estimations de canal.

En pratique, la procédure d'estimation proposée comprend une première étape d'estimation grossière basée sur une grille, et une seconde étape basée sur une méthode de Newton.

Pour la première étape, on considère tout d'abord une grille de la forme [0, $K_{\max}] \times [0,2\pi]$ où $K_{\max}$ est une valeur maximale pour K. Typiquement, il est possible de fixer $K_{\max}$ à 10 ou 20 suivant les applications et la complexité souhaitée, sachant qu'augmenter $K_{\max}$ augmente la complexité de cette première étape. Les deux intervalles [0,$K_{\max}]$ et [0,2$\pi$] sont discrétisés. [0,$K_{\max}]$ est discrétisé avec un pas de $K_{\text{pas}}$ et [0,2$\pi$] avec un pas de $\theta_{\text{pas}}$. L'estimation grossière consiste à calculer la vraisemblance des données pour toutes les combinaisons possibles de [0,$K_{\max}]$ et [0,2$\pi$], c'est-à-dire pour tous les couples ($pK_{pas},q\theta_{pas}$) avec p et q des entiers positifs ou nuls choisis tels que $pK_{\text{pas}} \le K_{\max}$ et $q\theta_{\text{pas}} \le 2\pi$. Le couple ($p^*K_{pas}$, $q^*\theta_{\text{pas}}$) maximisant la log-vraisemblance des données est conservée. Cette première étape permet d'obtenir une estimation grossière de $\Phi$ qui servira comme initialisation lors de la seconde étape.

L'estimation grossière de la première étape est ensuite utilisée dans une seconde étape comme initialisation d'une méthode de Newton pour obtenir une estimation plus précise. La méthode de Newton est une méthode itérative, et l'expression servant à calculer l'itération k + 1 est la suivante :

$$\widehat{\boldsymbol{\Phi}}_l^{k+1} = \widehat{\boldsymbol{\Phi}}_l^k - \left(H_l^k\right)^{-1} g_l^k$$

où $g_l^k$ est le vecteur gradient de la log-vraisemblance des données évalué en $\widehat{\boldsymbol{\Phi}}_l^k$, et $H_l^k$ est la matrice Hessienne de cette log-vraisemblance, également évaluée en $\widehat{\boldsymbol{\Phi}}_l^k$. Ces deux grandeurs s'expriment comme suit :

$$g_l^k = \begin{pmatrix} \dfrac{\partial\log\left(L\left((\boldsymbol{\varphi}, \widehat{\boldsymbol{\Phi}}_l^k)\right)\right)}{\partial K_l} \\ \dfrac{\partial\log\left(L\left((\boldsymbol{\varphi}, \widehat{\boldsymbol{\Phi}}_l^k)\right)\right)}{\partial \theta_l^0} \end{pmatrix}$$

$$H_l^k = \begin{pmatrix} \dfrac{\partial^2 \log(L\left(\left(\left(\boldsymbol{\varphi}, \widehat{\Phi}_l^k\right)\right)\right))}{\partial K_l^2} & \dfrac{\partial^2 \log(L\left(\left(\left(\boldsymbol{\varphi}, \widehat{\Phi}_l^k\right)\right)\right))}{\partial \theta_l^0 \partial K_l} \\ \dfrac{\partial^2 \log(L\left(\left(\left(\boldsymbol{\varphi}, \widehat{\Phi}_l^k\right)\right)\right))}{\partial \theta_l^0 \partial K_l} & \dfrac{\partial^2 \log(L\left(\left(\left(\boldsymbol{\varphi}, \widehat{\Phi}_l^k\right)\right)\right))}{\partial {\theta_l^0}^2} \end{pmatrix}$$

Les calculs des dérivées contenues dans le gradient et la matrice Hessienne sont facilement exécutés par un homme du métier et ne sont pas reportés dans ce document.

La méthode de Newton est connue pour converger de manière quadratique lorsque l'initialisation se situe dans le voisinage de la solution optimale. Ainsi, la première estimation grossière a pour but d'assurer une convergence rapide vers les estimateurs du maximum de vraisemblance.

L'estimateur proposé présente comme avantages de ne pas dépendre d'un modèle de corrélation particulier, d'être insensible au phénomène de masquage multiplicatif, et d'utiliser toute l'information de phase disponible dans les estimations de canal.

Le tableau suivant, résume les outils et la méthodologie développée pour l'estimation des paramètres statistiques du canal.

| | $K_l$ | $G_l$ |
|---|---|---|
| Suivi | 1-Détection de rupture basée sur la phase ou 2-Fenêtre glissante | Fenêtre glissante de taille proportionnelle à l'inverse de la vitesse (équation (5)). |
| Estimation | Maximum de vraisemblance de la phase | Estimateur basé sur les modules (équation (6)) |

Pour résumer, une détection de rupture est effectuée pour suivre les variations brusques de $K_l$. Lorsqu'on ne détecte pas de variations brusques, une fenêtre glissante est utilisée pour estimer ce paramètre.

En ce qui concerne $G_l$, ce paramètre est toujours estimé via une fenêtre glissante, dont la taille peut être adaptée à la vitesse relative de l'émetteur par rapport au récepteur.

Une fois que les récepteurs ont estimé la statistique de leur canal, étant données les configurations de réseaux considérés, selon la variante de réalisation illustrée à la figure 1 pour le cas centralisé, les récepteurs vont communiquer la statistique de leur canal à l'allocateur de ressources. Selon la deuxième variante de réalisation illustrée à la figure 2, les récepteurs communiquent les statistiques à l'émetteur.

Dans le premier cas, l'allocateur de ressources va résoudre un problème d'optimisation du type :

$$\underset{E,\gamma,MCS}{\text{maximiser}} \quad f(\boldsymbol{E}, \boldsymbol{\gamma}, \boldsymbol{MCS}, \widehat{\boldsymbol{K}}, \widehat{\mathbf{G}})$$

sous contrainte : $g_i(\boldsymbol{E}, \gamma, \boldsymbol{MCS}, \widehat{K}, \widehat{\mathbf{G}}) \leq 0$, $i = 1, ..., N_c$ où $f$ représente la fonction objectif du problème, qui dépend des variables d'optimisation et des statistiques estimées, les fonctions $g_i$ représentent des contraintes minimales à respecter, $\widehat{\boldsymbol{K}} = [\widehat{K}_1,...,\widehat{K}_L]$ et $\widehat{\mathbf{G}} = [\widehat{G}_1,...,\widehat{G}_L]$. Par exemple, dans [5], le problème de la minimisation de la puissance sous des contraintes de débit minimale et de puissance maximale est résolu. Ainsi, dans cette référence, $f$ correspond à la somme des puissances consommées par les différents utilisateurs et les $g_i$ correspondent à des contraintes de débit et de puissance maximales.

Notons qu'il pourrait être possible de traiter des approches multi-objectifs. Par exemple, il pourrait être possible de minimiser la puissance d'émission de certains liens sous des contraintes de débit minimal, et maximiser le débit des liens restants sous des contraintes de puissances maximales. Ce type de problème pourrait être résolu de façon gloutonne (greedy en anglais) en résolvant en premier lieu le problème de minimisation de la puissance, et en second lieu le problème de la maximisation des débits des autres liens en utilisant les ressources restantes à l'issu de la première étape.

Dans le second cas où les récepteurs ne communiquent leur estimée de la statistique qu'à l'émetteur, la bande de fréquence n'est plus considérée comme une variable d'optimisation puisque les récepteurs ne peuvent pas choisir quelles sous-porteuses utiliser de manière autonome. Ainsi, chaque émetteur doit résoudre un problème d'optimisation de la forme suivante :

$$\underset{E_l, MCS_l}{\text{maximiser}} \quad f(E_l, MCS_l, \widehat{K}_l, \widehat{G}_l)$$

sous contrainte : $g_i(E_l, MCS_l, \hat{K}_l, \hat{G}_l) \le 0$, $i = 1, ..., N_c$ par exemple, il est possible de traiter le problème de la minimisation de la puissance d'émission sous une contrainte de débit et de puissance maximale.

Le procédé selon l'invention permet notamment de mieux allouer les ressources (puissance, schéma de codage et de modulation), aux différents nœuds d'un réseau afin de maximiser les performances de ce dernier, ceci de manière dynamique afin de pouvoir s'adapter en permanence aux évolutions des conditions de propagation qui varient suivant la mobilité des nœuds. Il permet une optimisation dynamique de puissance de chaque poste prenant en compte la mobilité et les interférences potentielles et l'utilisation au mieux de la puissance suivant un critère donné, sous contrainte de débit, ou maximisation du débit sous contrainte de puissance maximum ou en combinant les deux critères.

**Références**

[1] Ko, Y. C., & Alouini, M. S. (2003). Estimation of Nakagami-m fading channel parameters with application to optimized transmitter diversity systems. IEEE Transactions on Wireless Communications, 2(2), 250-259.

[2] Yang et al., US Patent No. : 8,355,360 B2, method and apparatus for allocating downlink power in an orthogonal frequency division multiplexing communication system.

[3] C. Tepedelenlioglu, A. Abdi and G. B. Giannakis, "The Ricean K factor: estimation and performance analysis," in IEEE Transactions on Wireless Communications, vol. 2, no. 4, pp. 799-810, July 2003.

[4] G. G. Messier and J. A. Hartwell, "An Empirical Model for Nonstationary Ricean Fading," in IEEE Transactions on Vehicular Technology, vol. 58, no. 1, pp. 14-20, Jan. 2009.

[5] X. Leturc, C. J. Le Martret and P. Ciblat, "Multiuser power and bandwidth allocation in ad hoc networks with Type-I HARQ under Rician channel with statistical CSI," 2017 International Conference on Military Communications and Information Systems (ICMCIS), Oulu, 2017, pp. 1-7.

[6] Dogandzic, A., & Zhang, B. (2005). Dynamic shadow-power estimation for wireless communications. IEEE transactions on signal processing, 53(8), 2942-2948.

[7] Medawar, S., Handel, P., & Zetterberg, P. (2013). Approximate maximum likelihood estimation of Rician K-factor and investigation of urban wireless measurements. IEEE Transactions on Wireless Communications, 12(6), 2545-2555.

[8] Yang, L., Cheng, J., & Holzman, J. F. (2015). Maximum Likelihood Estimation of the Lognormal-Rician FSO Channel Model. IEEE Photonics Technology Letters, 27(15), 1656-1659.

**Revendications**

1.  Procédé pour calculer en temps réel ou quasi-réel, des valeurs des statistiques d'un canal de propagation afin d'allouer des ressources à un ou plusieurs liens de communication entre deux nœuds dans un réseau de communication comprenant au moins les étapes suivantes :

    Estimer en temps réel ou quasi-réel des paramètres statistiques $K_l$ qui correspond au rapport entre la puissance du signal reçu en ligne de vue directe et la puissance des trajets diffus et $G_l$ correspondant au rapport gain-à-bruit moyen d'un modèle de canal de Rice modélisé pour chaque lien $l$ du réseau en utilisant des informations provenant de séquences d'apprentissage contenues dans un signal reçu qui permettent d'estimer le canal de propagation, (61),

    A partir des estimations du canal de propagation mémorisées, au niveau d'un récepteur, exécuter en parallèle les étapes suivantes:

      - détecter s'il y a un changement dans la distribution statistique des estimations du canal traduisant une rupture, (62),

        Si une rupture est détectée, conserver une partie des estimations du canal et estimer la statistique $K_l$, en utilisant une partie $T_W/2$ des estimations du canal de propagation avec $T_W$ le nombre d'estimations du canal utilisé pour effectuer la détection de rupture,

        Sinon, lorsqu'aucune rupture n'est détectée, estimer la statistique $K_l$ du canal sur les $T_W$ dernières estimations du canal, (64),

- estimer la statistique $G_l$ du canal en utilisant une fenêtre temporelle glissante, (66),

Transmettre (65) les valeurs de statistiques de canal calculées à une étape d'allocation des ressources qui prend en compte des contraintes de service et définit l'allocation des ressources en fonction des estimations des statistiques du canal.

**2.** Procédé selon la revendication 1 **caractérisé en ce que** pour détecter une rupture on calcule la phase pour chaque estimation du canal, on sépare (72, 73) en deux sous-ensembles l'ensemble des phases calculées et on compare entre elles les distributions statistiques des phases des deux ensembles, si un changement dans les distributions statistiques est détecté, on conserve uniquement les estimations du canal correspondant à un des deux sous-ensembles (75), sinon on conserve toutes les estimations du canal (76).

**3.** Procédé selon la revendication 2 **caractérisé en ce que** l'on compare le contenu des deux distributions statistiques en utilisant un test basé sur la vraisemblance statistique des phases des estimations de canal, à l'aide de tests statistiques d'adéquation à deux échantillons.

**4.** Procédé selon la revendication 1 **caractérisé en ce que** le paramètre $K_l$ traduisant une relation entre la puissance du trajet en ligne de vue et la puissance de trajets diffus est estimée en maximisant la log-vraisemblance de la phase des estimations du canal.

**5.** Procédé d'allocation de ressources dans un réseau de type ad-hoc selon la revendication 1 **caractérisé en ce que** l'étape d'allocation des ressources pour chaque lien de communication d'un réseau ad-hoc est effectuée par un dispositif différent des émetteurs/récepteurs au lien de communication.

**6.** Procédé d'allocation de ressources dans un réseau de type ad-hoc selon la revendication 1 **caractérisé en ce que** l'étape d'allocation des ressources est exécutée par chacun des liens de communication du réseau ad-hoc en fonction des contraintes.

**7.** Procédé selon l'une des revendications 5 ou 6 **caractérisé en ce que** l'on attribue à chaque lien de communication une puissance d'émission, une proportion de la bande de fréquence utilisée au sein du réseau ad-hoc ainsi qu'un schéma de modulation et de codage, lesdits paramètres étant attribués afin de maximiser ou de minimiser une ou plusieurs desdites grandeurs : la puissance énergétique totale ou la somme des débits des liens de communications.

**8.** Système pour calculer les statistiques d'un canal de propagation afin d'allouer des ressources dans un réseau de communication comportant plusieurs liens de communication (10, 20) **caractérisé en ce qu'**il comporte un allocateur de ressources (12, 22, 32) et un processeur configuré pour exécuter les étapes du procédé selon l'une des revendications 1 à 7.

**9.** Système d'allocation de ressources selon la revendication 8 **caractérisé en ce que** l'allocateur de ressources (32) est inclus dans un terminal (30) distinct des émetteurs/récepteurs (Tx1, Rx1, Tx2, Rx2) auxquels on alloue des ressources.

**10.** Système d'allocation de ressources selon la revendication 9 dans un réseau de communication ad-hoc **caractérisé en ce que** chaque émetteur/récepteur (Tx1, Rx1, Tx2, Rx2) demandant une allocation de ressources est configuré pour exécuter les étapes du procédé selon l'une des revendications 1 à 7.

**Patentansprüche**

**1.** Verfahren zum Berechnen in Echtzeit oder Quasi-Echtzeit der Werte der Statistiken eines Ausbreitungskanals, um einer oder mehreren Kommunikationsverbindung(en) zwischen zwei Knoten in einem Kommunikationsnetzwerk Ressourcen zuzuweisen, mindestens folgende Schritte umfassend:

Schätzen, in Echtzeit oder in Quasi-Echtzeit des statistischen Parameters $K_l$, welcher dem Verhältnis zwischen der Leistung des mit direkter Sichtverbindung empfangenen Signals und der Leistung diffuser Wege entspricht, und wobei $G_l$ dem mittleren Verstärkung-zu-Rauschen-Verhältnis eines Rice-Kanalmodells entspricht, welches für jede Verbindung *l* des Netzwerks modelliert wird, unter Verwendung der Informationen aus Lernsequenzen, welche in einem empfangenen Signal enthalten sind, welche es ermöglichen, den Ausbreitungskanal zu schätzen, (61),

anhand der gespeicherten Schätzungen des Ausbreitungskanals, an einem Empfänger, paralleles Ausführen folgender Schritte:

- Erkennen, ob eine Änderung in der statistischen Verteilung der Schätzungen des Kanals vorliegt, welche eine Unterbrechung anzeigt, (62),

wenn eine Unterbrechung erkannt wird, Aufbewahren eines Teils der Schätzungen des Kanals und Schätzen der Statistik $K_l$, unter Verwendung eines Teils $T_W/2$ der Schätzungen des Ausbreitungskanals, wobei $T_W$ die Anzahl der Schätzungen des Kanals, welche zur Ausführung der Unterbrechungserkennung verwendet wird, ansonsten, wenn keine Unterbrechung erkannt wird, Schätzen der Statistik $K_l$ des Kanals über die $T_W$ letzten Schätzungen des Kanals, (64),

- Schätzen der Statistik $G_l$ des Kanals unter Verwendung eines gleitenden Zeitfensters, (66),

Übertragen (65) der bei einem Ressourcenzuweisungsschritt berechneten Werte von Kanal-Statistiken, welcher Dienstvorgaben berücksichtigt und die Ressourcenzuweisung entsprechend den Schätzungen der Statistiken des Kanals definiert.

2. Verfahren nach Anspruch 1, **dadurch gekennzeichnet, dass** zur Erkennung einer Unterbrechung die Phase für jede Schätzung des Kanals berechnet wird, sämtliche berechneten Phasen in zwei Teilgruppen getrennt werden (72, 73), und die statistischen Verteilungen der Phasen der beiden Gruppen miteinander verglichen werden, wenn eine Änderung in den statistischen Verteilungen erkannt wird, nur die Schätzungen desjenigen Kanals aufbewahrt werden, welcher einer der beiden Teilgruppen (75) entspricht, und ansonsten sämtliche Schätzungen des Kanals (76) aufbewahrt werden.

3. Verfahren nach Anspruch 2, **dadurch gekennzeichnet, dass** der Inhalt der beiden statistischen Verteilungen unter Verwendung eines Tests verglichen wird, welcher auf der statistischen Wahrscheinlichkeit der Phasen der Kanal-Schätzungen mithilfe von statistischen Adäquationstests mit zwei Stichproben basiert.

4. Verfahren nach Anspruch 1, **dadurch gekennzeichnet, dass** der Parameter $K_l$, welcher eine Beziehung zwischen der Leistung des Wegs in direkter Sicht und der Leistung diffuser Wege anzeigt, durch Maximieren der Log-Likelihood der Phase der Schätzungen des Kanals geschätzt wird.

5. Verfahren zum Zuweisen von Ressourcen in einem Netzwerk vom Typ ad hoc nach Anspruch 1, **dadurch gekennzeichnet, dass** der Schritt der Ressourcenzuweisung für jede Kommunikationsverbindung eines ad hoc-Netzwerks durch eine unterschiedliche Vorrichtung der Sender/Empfänger an der Kommunikationsverbindung vorgenommen wird.

6. Verfahren zum Zuweisen von Ressourcen in einem Netzwerk vom Typ ad hoc nach Anspruch 1, **dadurch gekennzeichnet, dass** der Schritt der Ressourcenzuweisung durch jede der Kommunikationsverbindungen des ad hoc-Netzwerks entsprechend den Vorgaben ausgeführt wird.

7. Verfahren nach einem der Ansprüche 5 oder 6, **dadurch gekennzeichnet, dass** jeder Kommunikationsverbindung eine Sendeleistung, eine Proportion des innerhalb des ad hoc-Netzwerks verwendeten Frequenzbandes sowie ein Modulations- und Codierungsschema zugewiesen wird, wobei die Parameter zugewiesen werden, um eine oder mehrere Größen zu maximieren oder zu minimieren: die gesamte Energieleistung oder die Summe der Raten der Kommunikationsverbindungen.

8. System zum Berechnen der Statistiken eines Ausbreitungskanals, um Ressourcen in einem Kommunikationsnetzwerk zuzuweisen, welches mehrere Kommunikationsverbindungen (10, 20) beinhaltet, **dadurch gekennzeichnet, dass** es einen Ressourcenzuweiser (12, 22, 32) und einen Prozessor beinhaltet, welcher konfiguriert ist, um die Schritte des Verfahrens nach einem der Ansprüche 1 bis 7 auszuführen.

9. System zur Ressourcenzuweisung nach Anspruch 8, **dadurch gekennzeichnet, dass** der Ressourcenzuweiser (32) in einem Endgerät (30) enthalten ist, welches sich von den Sendern/Empfängern (Tx1, Rx1, Tx2, Rx2), welchen die Ressourcen zugewiesen werden, unterscheidet.

10. System zur Ressourcenzuweisung nach Anspruch 9 in einem ad hoc-Kommunikationsnetzwerk, **dadurch gekennzeichnet, dass** jeder Sender/Empfänger (Tx1, Rx1, Tx2, Rx2), welcher eine Ressourcenzuweisung anfordert, konfiguriert ist, um die Schritte des Verfahrens nach einem der Ansprüche 1 bis 7 auszuführen.

**Claims**

1. Method for computing in real or quasi-real time, values of the statistics of a propagation channel so as to allocate resources to one or more communication links between two nodes in a communication network comprising at least the following steps:

    estimate in real or quasi-real time the statistical parameter $K_l$ which corresponds to the ratio between the power of the signal received in direct line of sight and the power of the diffuse paths and $G_l$ corresponding to the mean gain-to-noise ratio of a Rice channel model modelled for each link $l$ of the network by using information originating from training sequences contained in a received signal which make it possible to estimate the propagation channel, (61),
    on the basis of the propagation channel estimations stored, at a receiver, execute the following steps in parallel:

        - detect whether there is a change in the statistical distribution of the estimations of the channel manifesting a break, (62),

        if a break is detected, preserve part of the estimations of the channel and estimate the statistic $K_l$, by using part $T_W/2$ of the estimations of the propagation channel with $T_W$ the number of estimations of the channel used to perform the break detection,
        otherwise, when no break is detected, estimate the statistic $K_l$ of the channel over the last $T_W$ estimations of the channel, (64),

        - estimate the statistic $G_l$ of the channel by using a sliding time window, (66),

    transmit (65) the values of channel statistics computed to a step of allocating the resources which takes into account service constraints and defines the allocation of the resources as a function of the estimations of the statistics of the channel.

2. Method according to claim 1, **characterized in that** in order to detect a break, one computes a phase for each estimation of the channel, the set of computed phases is separated (72, 73) into two subsets and the statistical distributions of the phases of the two sets are inter-compared, if a change in the statistical distributions is detected, only the estimations of the channel corresponding to one of the two subsets (75) are preserved, otherwise all the estimations of the channel (76) are preserved.

3. Method according to claim 2, **characterized in that** the content of the two statistical distributions is compared by using a test based on the statistical likelihood of the phases of the channel estimations, with the aid of statistical tests of fit with two samples.

4. Method according to claim 1, **characterized in that** the parameter $K_l$ manifesting a relation between the power of the line of sight path and the power of diffuse paths is estimated by maximizing the log-likelihood of the phase of the estimations of the channel.

5. Method for allocating resources in a network of ad hoc type according to claim 1, **characterized in that** the step of allocating the resources for each communication link of an ad hoc network is performed by a different device from the transmitters/receivers at the communication link.

6. Method for allocating resources in a network of ad hoc type according to claim 1, **characterized in that** the step of allocating the resources is executed by each of the communication links of the ad hoc network as a function of the constraints.

7. Method according to one of claims 5 or 6, **characterized in that** a transmission power, a proportion of the frequency band used within the ad hoc network as well as a modulation and coding scheme is allocated to each communication link, the said parameters being allotted so as to maximize or to minimize one or more of the said quantities: the total energy power or the sum of the bitrates of the communications links.

8. System for computing the statistics of a propagation channel so as to allocate resources in a communication network comprising several communication links (10, 20), **characterized in that** it comprises a resources allocator (12, 22, 32) and a processor which is configured to execute the steps of the method according to one of claims 1 to 7.

9. System for allocating resources according to claim 8, **characterized in that** the resources allocator (32) is included in a terminal (30) distinct from the transmitters/receivers (Tx1, Rx1, Tx2, Rx2) to which resources are allocated.

10. System for allocating resources according to claim 9 in an ad hoc communication network, **characterized in that** each transmitter/receiver (Tx1, Rx1, Tx2, Rx2) requesting an allocation of resources is configured to execute the steps of the method according to one of claims 1 to 7.

**FIG.1**

**FIG.2**

FIG.3

FIG.4

```
┌─────────────────────────────┐
│   Séquence d'apprentissage   │─────── 51
└─────────────────────────────┘
                │
                ▼
┌─────────────────────────────┐
│      Estimation du canal     │─────── 52
└─────────────────────────────┘
                │
                ▼
┌─────────────────────────────┐
│   Estimation de la statistique │─────── 53
└─────────────────────────────┘
                │
                ▼
┌─────────────────────────────┐
│       Communication à        │
│   l'allocateur de ressource  │─────── 54
│       ou à l'émetteur        │
└─────────────────────────────┘
                │
                ▼
┌─────────────────────────────┐
│     Allocation des ressources │─────── 55
└─────────────────────────────┘
                │
                ▼
┌─────────────────────────────┐
│      Communication des       │
│     ressources allouées      │─────── 56
│       aux émetteurs          │
└─────────────────────────────┘
```

# FIG.5

Estimation du canal — 61

Estimation de $K_l$     Estimation de $G_l[i]^2$

Détection
de rupture

62

Rupture ?

Oui     Non

Estimation $\hat{K}_l$
basée sur les
$T_w/2$ derniers
échantillons    63

Estimation $\hat{K}_l$
basée sur les
$T_w$ derniers
échantillons    64

Fenêtre glissante

66

Envoie des statistiques
à l'allocateur de
ressources ou à
l'émetteur    65

FIG.6

71

$N$ Estimations de canal
$[\tilde{h}_l[1],\ldots,\tilde{h}_l[T_w]]$ et phase associée
$[\varphi_1,\ldots,\varphi_{T_w}]$

72

$[\varphi_1,\ldots,\varphi_{T_w/2}]$

73

$[\varphi_{\frac{T_w}{2}+1},\ldots,\varphi_{T_w}]$

74

Même paramètre $K_l$ ?

Oui

Non

conserver
$[\tilde{h}_l,\ldots,\tilde{h}_{Tw}]$

$[\tilde{h}_{\frac{T_w}{2}+1},\ldots,\tilde{h}_N]$

76

75

FIG.7

$P$ Estimations de canal $[\tilde{h}_l,...,\tilde{h}_p]$ —— 81

Calcul des statistiques —— 82

Suppression de l'échantillon le plus ancien —— 83

Ajout de la nouvelle estimation du canal —— 84

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0159963 A
- US 8355360 B2, Yang

**Littérature non-brevet citée dans la description**

- **KO, Y. C. ; ALOUINI, M. S.** Estimation of Nakagami-m fading channel parameters with application to optimized transmitter diversity systems. *IEEE Transactions on Wireless Communications,* 2003, vol. 2 (2), 250-259
- **C. TEPEDELENLIOGLU ; A. ABDI ; G. B. GIANNAKIS.** The Ricean K factor: estimation and performance analysis. *IEEE Transactions on Wireless Communications,* Juillet 2003, vol. 2 (4), 799-810
- **G. G. MESSIER ; J. A. HARTWELL.** An Empirical Model for Nonstationary Ricean Fading. *IEEE Transactions on Vehicular Technology,* Janvier 2009, vol. 58 (1), 14-20
- **X. LETURC ; C. J. LE MARTRET ; P. CIBLAT.** Multiuser power and bandwidth allocation in ad hoc networks with Type-I HARQ under Rician channel with statistical CSI. *2017 International Conference on Military Communications and Information Systems (IC-MCIS),* 2017, 1-7

- **DOGANDZIC, A. ; ZHANG, B.** Dynamic shadow-power estimation for wireless communications. *IEEE transactions on signal processing,* 2005, vol. 53 (8), 2942-2948
- **MEDAWAR, S. ; HANDEL, P. ; ZETTERBERG, P.** Approximate maximum likelihood estimation of Rician K-factor and investigation of urban wireless measurements. *IEEE Transactions on Wireless Communications,* 2013, vol. 12 (6), 2545-2555
- **YANG, L. ; CHENG, J. ; HOLZMAN, J. F.** Maximum Likelihood Estimation of the Lognormal-Rician FSO Channel Model. *IEEE Photonics Technology Letters,* 2015, vol. 27 (15), 1656-1659